# EUROPEAN PATENT APPLICATION

(11) **EP 3 462 093 A1**
(43) Date of publication of application: **03.04.2019**
(21) Application number: 17194208.9
(22) Date of filing: 29.09.2017
(51) Int. Cl.: F24D 5/00, F24D 19/10, F24F 5/00

(54) **SOLAR AIR-HEATER**

(71) Applicant: Vestel Elektronik Sanayi ve Ticaret A.S., 45030 Manisa (TR)
(72) Inventor: ÖZMEN, Ferhat, 45030 Manisa (TR)
(74) Representative: Roberts, David

(57) **Abstract**

There is disclosed a solar air-heater (104) for a building (124). The solar air-heater comprising a main body portion (228) and a controller (206) arranged to communicate with a temperature sensor (108) located in an interior of the building. A cavity (230) is disposed in the main body portion of the solar air-heater, the cavity comprising an inlet (236) for introducing air into the cavity and an outlet (238) for supplying air from the cavity to the interior of the building (124). The cavity has a front face (232) for allowing solar radiation to pass in to the cavity and a rear face (234) for receiving the solar radiation and heating air in the cavity. The cavity comprises a path (245) along which air is directed from the inlet to the outlet, a length of the path being adjustable by the controller (206) in dependence on a detected temperature in the interior of the building

## Description

### Technical Field

The present disclosure relates to a solar air-heater for a building.

### Background

Solar air-heaters may be used to provide warm air in to the interior of a building. Usually a solar air-heater will be positioned on an exterior of a building, and is configured to use solar radiation from the sun to warm air inside the heater. The warmed air can then be provided to the interior of the building.

### Summary

According to a first aspect disclosed herein, there is provided a solar air-heater for a building comprising: a main body portion; a controller arranged to communicate with a temperature sensor located in an interior of the building; a cavity in the main body portion of the solar air-heater, the cavity comprising an inlet for introducing air into the cavity and an outlet for supplying air from the cavity to the interior of the building, the cavity having a front face for allowing solar radiation to pass in to the cavity and a rear face for receiving the solar radiation and heating air in the cavity; the cavity comprising a path along which air is directed from the inlet to the outlet, a length of the path being adjustable by the controller in dependence on a detected temperature in the interior of the building.

According to an example, the solar air-heater is adjustable between an active state and an inactive state, the controller configured to configure the solar air-heater in to the active state in response to a temperature in the building falling below a threshold level.

According to an example, the controller is configured to configure the solar air-heater in to the active state in response to a temperature in the building falling below a threshold level and detection by a light sensor in communication with the controller of an amount of sunshine being above a threshold level.

According to an example, in the active state a dark surface of the rear wall is exposed, and in the inactive state a dark surface of the rear wall is hidden.

According to an example, the path having a first length when the detected temperature is a first temperature, and the path having a second length when the detected temperature is a second temperature, the first length being less than the second length, and the first temperature being higher than the second temperature.

According to an example, the path is defined by one or more movable panels.

According to an example, the one or more movable panels are each retractable or rotatable from a first position to a second position.

According to an example, the solar air-heater comprises a first fan to draw air in to the solar air-heater, and a second fan to drive air out of the solar air-heater and in to the interior of the building.

According to an example, the solar air-heater is configured to be attached to an exterior of the building.

According to an example, operation of the solar air-heater is powered by a renewable energy source in communication with the solar air-heater.

According to an example, the renewable energy source comprises one or more photovoltaic solar panels.

### Brief Description of the Drawings

To assist understanding of the present disclosure and to show how embodiments may be put into effect, reference is made by way of example to the accompanying drawings in which:
Figure 1 shows schematically a solar heating system according to an example.
Figures 2A to 2C show schematically a solar air-heater according to an example.
Figures 3A and 3B show schematically a solar air-heater according to an example.
Figure 4 shows schematically a method according to an example.
Figure 5 shows schematically a method according to an example.

### Detailed Description

The present disclosure has applicability to solar air-heaters (which may also be referred to as solar heat-exchangers).

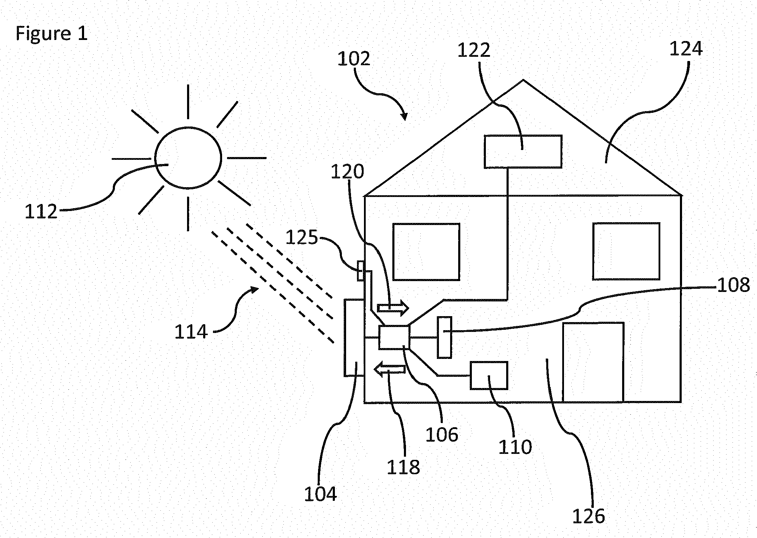

Figure 1 shows schematically a solar heating system 102 according to an example. The solar heating system comprises a building 124. The building may be a domestic building such as a house, or another type of building such as a commercial building (e.g. a factory, offices etc.). The building 124 comprises a solar air-heater 104 according to an example. The solar air-heater 104 is constructed and arranged to take cold or cool air in through an inlet of the solar air-heater 104, and to warm that air and provide warm or warmed air into an interior 126 of the building through an outlet of the solar air-heater 104. The cold air or cool air may be drawn in to the solar from the interior 126 of the building. In Figure 1 air drawn from the interior 126 of the building is schematically shown by arrow 118. Warm or warmed air is provided from the solar air-heater 104 to the interior 126 of the building, as schematically shown by arrow 120.

The cool or cold air that is introduced or supplied to the solar air-heater 104 is heated by solar radiation 114 from the sun 112. In some examples the solar air-heater 104 is positioned on an exterior surface of the building (e.g. side-wall or roof) that faces the sun for the longest time in the day for that building, or which faces the sun at certain times of day.

In this example operations of the solar air-heater 104 are controlled by controller 106. The controller 106 comprises a memory and a processor. The controller 106 is connected to a temperature sensor or thermometer 108, positioned in the interior 126 of the building 124. In some examples the solar air-heater 104 has an active state in which the solar air-heater 104 is operative to warm air in the manner described, and an inactive state in which the solar air-heater 104 is not operative to supply warmed air to the building. In other words the solar air-heater 104 may be changeable between an on state and an off state. According to some examples the controller 106 is configured to place or configure the solar air-heater 104 in to the active state in response to detection that the temperature in the interior of the building has fallen below a threshold value. For example the threshold value may be 25°C or 20°C.

Also shown in Figure 1 is light sensor 125 which is in communication with controller 106. The light sensor 125 is arranged to determine a level of ambient light or an amount of sunshine incident thereon. Accordingly the controller 106 can utilise information from the light sensor 125 to determine how much sunshine or light there is, and therefore a likely usefulness of the solar air-heater 104 in those light conditions.

In some examples, the controller 106 is configured to place or configure the solar air-heater 104 in to the active state in response to detection that the temperature in the interior of the building has fallen below a threshold value and a determination that the level of light detected by light sensor 125 is sufficient for the solar air-heater 104 to operate adequately (e.g. will be capable of heating air up to a required temperature).

The solar air-heater 104 (and indeed controller 106, temperature sensor 108, light sensor 125 and other electrical items in the building 124) may be powered by mains power supply 110, and/or a local renewable energy source shown schematically at 122. The renewable energy source 122 may comprise one or more photovoltaic cells (solar panels) or a wind turbine, for example.

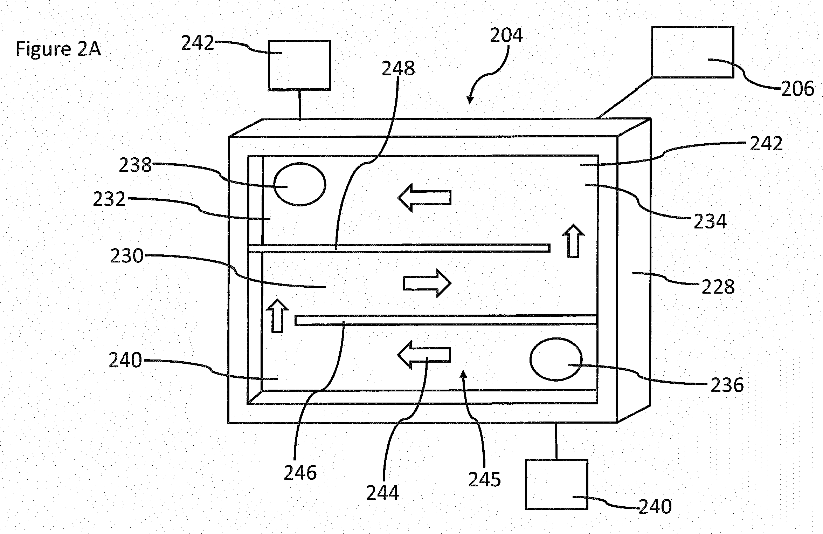

Figures 2A to 2C show a solar air-heater 204 in more detail according to an example. The solar air-heater 204 comprises a main body portion 228. The main body portion 228 in this example is generally box-like in nature. Attached to the main body portion 228 is a front face 232 and a rear face 234. The front face 232 allows solar radiation to pass in to a cavity or enclosure 230 between the front face 232 and rear face 234. The cavity 230 is enclosed or substantially enclosed by main body portion 228, and front face 232 and rear face 234 of the solar air-heater 204. In an example the front face 232 comprises a transparent or substantially transparent material. According to some examples the front face 232 comprises glass or plastic. The rear face 234 is configured and arranged to receive solar radiation incident thereon. The rear face 234 absorbs the solar radiation and warms air that is in the cavity 230, by releasing or transmitting heat from the rear face 234. In an example the rear face 234 comprises a dark colour, for example black, to maximise heat absorption. Air in the cavity 230 may also be heated directly by the solar radiation 114, in addition to the warmth transmitted from the rear face 234.

The solar air-heater 204 comprises an inlet 236 which allows cool or cold air to pass in to the solar air-heater 204. In this example a fan 240 is provided for driving or introducing the cool air in to the inlet 236. The solar air-heater 204 comprises an outlet 238 which allows air that has been warmed in the cavity 230 to pass out of the solar air-heater 204 and in to a building to be warmed (e.g. building 124 in Figure 1). In this example a fan 242 is provided for driving warmed air out of the cavity 230 and in to the building to be warmed. In the example of Figure 2A the inlet 236 is positioned in a lower region 240 of the solar air-heater 204 and the outlet 238 is positioned in an upper region 242 of the solar air-heater 204. Warm air rises within the solar air-heater 204, between the inlet 236 and outlet 238. A path generally shown at 245 that the air follows is shown by the block arrows, for example arrow 244. In examples, a length of the path is adjustable by controller 206 in communication with the solar air-heater 204. One or more panels or surfaces may be provided in the cavity 230 for defining the path along which the air travels. In the example of Figure 2A panels 246 and 248 are provided. These panels 246 and 248 are movable or adjustable by the controller 206 so as to alter the path that the air needs to take to get from the inlet 236 to the outlet 238. This movement or adjustment may be, for example, the panels 246 and/or 248 being rotatable or retractable. In some examples, when in their operative positions the long edges of the panels 246 and 248 may be flush against the front face 232 and rear face 234, so that the air being warmed must follow the path 245 and cannot escape over or under gaps between the panels 246 and 248 and the front face 232 and rear face 234 of the solar air-heater 204.

For example, in Figure 2A the warm air rising needs to take a circuitous or serpentine route around panel 246 and panel 248. This is a relatively long route, and provides a relatively long time in which the air in the cavity is subjected to being warmed. Therefore this configuration may be used when a detected temperature in the building to be warmed is relatively low (e.g. below 15°C) and therefore a relatively large amount of heating is required.

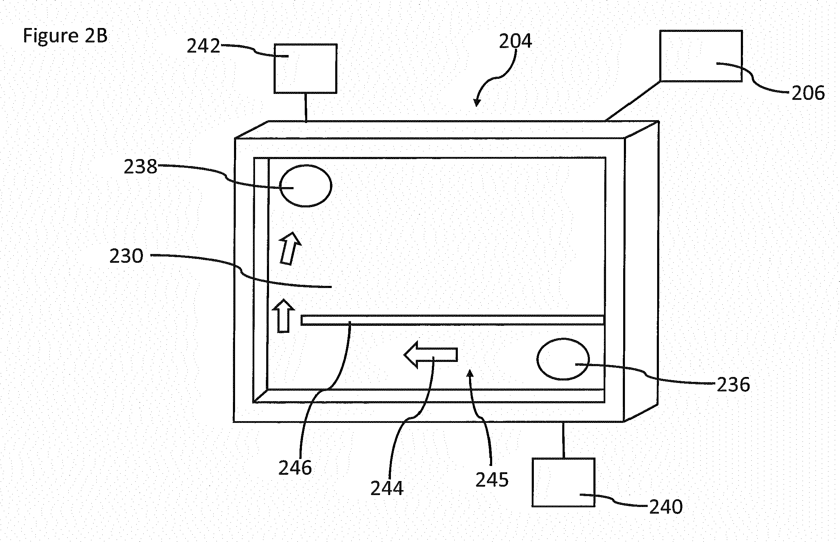

Turning to Figure 2B, panel 248 has been moved (e.g. retracted or rotated) such that it no longer forms a barrier or complete barrier to a path of warm air rising between inlet 236 and outlet 238. Panel 246 has remained in the same position as Figure 2A, so that the air still needs to pass around panel 246 in order to reach outlet 238. It will be understood that a distance of a path that the air needs to take between inlet 236 and outlet 238 is less in the configuration of Figure 2B than the configuration of Figure 2A. Therefore in the configuration of Figure 2B the air in the cavity 230 is subjected to warming for less time than in the configuration of Figure 2A. The controller may cause the solar air-heater 204 to enter the configuration of Figure 2B when, for example, a temperature in the building to be warmed is detected to have fallen below 20°C.

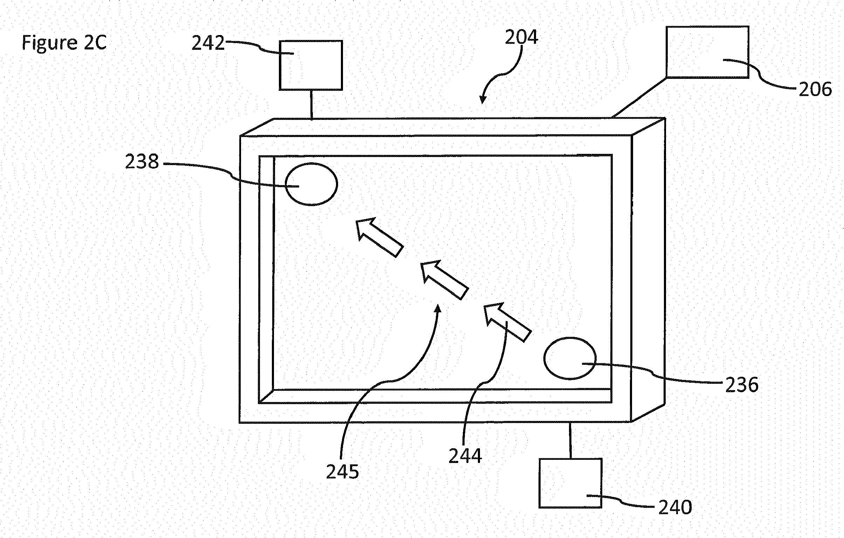

Turning to Figure 2C, in this example both panels 246 and 248 have been caused to be moved by controller 206. Accordingly the air can take a direct or relatively direct route between inlet 236 and outlet 238, as shown by arrows 244. Therefore in the configuration of Figure 2C the air in the cavity 230 is subjected to warming for less time than in the configurations of Figures 2A and 2B. The controller may cause the solar air-heater 204 to enter the configuration of Figure 2C when, for example, a temperature in the building to be warmed is detected to have fallen below 25°C.

Therefore, in general, it will be understood that the more the building needs to be heated (or the colder the interior of the building is), the longer the path between inlet and outlet of the solar air-heater 204 is configured to be. Or in other words it may be considered that the path has a first length when the detected temperature in the building is a first temperature, and the path has a second length when the detected temperature is a second temperature, the first length being less than the second length, and the first temperature being higher than the second temperature.

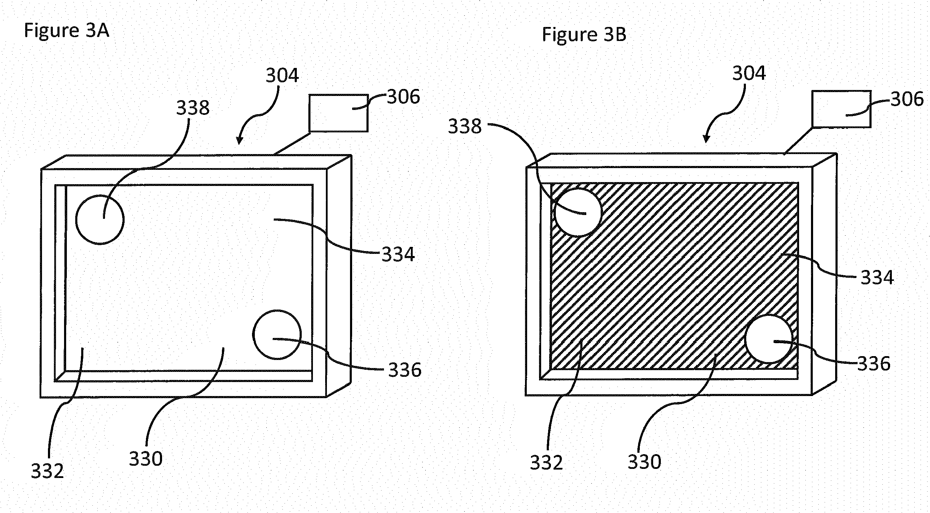

In some examples, a configuration of the rear face of the solar air-heater is changeable between a first mode and a second mode. In the first mode a dark or black surface of the rear face is hidden or not exposed, and in a second mode the dark or black surface of the rear face is exposed so as to receive and absorb solar radiation. This is shown in Figures 3A and 3B. In Figure 3A the rear face 334, or at least its darkened face, is hidden or not exposed. In Figure 3B, the rear face, or at least its darkened face is exposed, as represented by the cross-hatching. Thus, in Figure 3B the dark coloured rear face 334 is configured to receive solar radiation and to warm air in the solar air-heater 304, between the inlet 336 and outlet 338. According to examples the rear face 334 is changed between the first and second mode in response to an instruction from the controller 306. For example the controller 306 may switch the rear face 334 from the first mode to the second mode in response to a determination that a temperature in the interior of the building to be heated has dropped below a threshold level, and a determination that sunshine is present or a level of ambient light is above a threshold level. In one example a movable cover is provided, either in the cavity 330 of the solar air-heater 304 or on an exterior of the solar air-heater 304. In such examples the cover is movable in response to an instruction from the controller 306, so as to selectively cover or expose the rear face 334. In another example, the rear face 334 comprises a plurality of movable elements, each element being dark coloured on one side and light coloured on another. These elements can be rotated so as to selectively provide a light coloured rear face 334 (as shown in Figure 3A), or a dark coloured rear face 334 (as shown in Figure 3B). In Figures 3A and 3B the movable plates for adjusting path length between inlet 336 and outlet 338 are omitted for clarity.

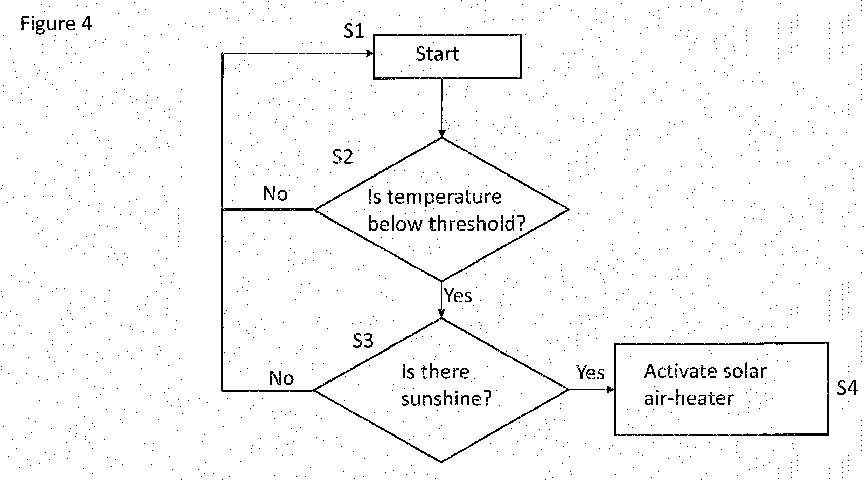

Figure 4 schematically shows a method according to an example.

At S1 the method starts. At S2 a determination is made as to whether a temperature in a building to be heated is below a threshold level (for example 25°C).

If the determination at S2 is "no", then the method loops back to S1. That is in some examples a temperature in the building to be heated is continuously monitored.

If the determination is "yes", then the method proceeds to S3. At S3 a determination is made as to whether there is sunshine. As described above this may be carried out by a light sensor on an exterior of the building to be heated.

If the determination at S3 is "no", then the method loops back to S 1.

If the determination at S3 is "yes", then the method proceeds to S4, where the solar air heater is activated i.e. switched on.

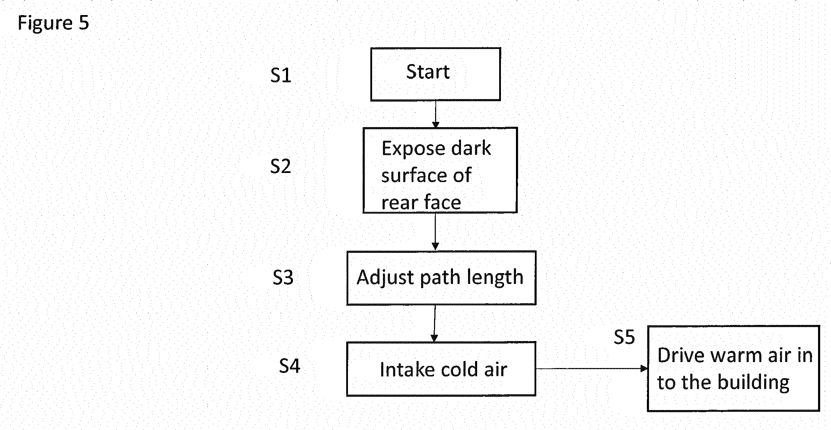

Figure 5 is a flow chart showing in more detail a method of activating the solar air-heater. That is Figure 5 may be considered to show in more detail S4 of Figure 4.

At S1, the method of activating the solar air-heater is started.

At S2, the dark surface of the rear face of the solar air-heater is exposed, as described with respect to Figures 3A and 3B.

At S3, the path length that the air being heated passes is adjusted or set, as described with respect to Figures 2A to 2C.

At S4 cold or cool air is introduced in to the solar air-heater. This may be by activating a fan to draw air in to the solar air-heater.

At S5, air that has been warmed in the solar air-heater is driven in to the building to be warmed. This may be by activating a fan to drive the warmed air out of the outlet of the solar air-heater.

It will be understood that this method is by way of example only. In other examples, S2 to S4 may take place in any order.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data, for example memory. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A solar air-heater for a building comprising:
a main body portion;
a controller arranged to communicate with a temperature sensor located in an interior of the building;
a cavity in the main body portion of the solar air-heater, the cavity comprising an inlet for introducing air into the cavity and an outlet for supplying air from the cavity to the interior of the building, the cavity having a front face for allowing solar radiation to pass in to the cavity and a rear face for receiving the solar radiation and heating air in the cavity;
the cavity comprising a path along which air is directed from the inlet to the outlet, a length of the path being adjustable by the controller in dependence on a detected temperature in the interior of the building.

2. A solar air-heater according to claim 1, wherein the solar air-heater is adjustable between an active state and an inactive state, the controller configured to configure the solar air-heater in to the active state in response to a temperature in the building falling below a threshold level.

3. A solar air-heater according to claim 2, wherein the controller is configured to configure the solar air-heater in to the active state in response to a temperature in the building falling below a threshold level and detection by a light sensor in communication with the controller of an amount of sunshine being above a threshold level.

4. A solar air-heater according to claim 2 or claim 3, wherein in the active state a dark surface of the rear wall is exposed, and in the inactive state a dark surface of the rear wall is hidden.

5. A solar air-heater according to any of claims 1 to 4, the path having a first length when the detected temperature is a first temperature, and the path having a second length when the detected temperature is a second temperature, the first length being less than the second length, and the first temperature being higher than the second temperature.

6. A solar air-heater according to any of claims 1 to 5, the path being defined by one or more movable panels.

7. A solar air-heater according to claim 6, the one or more movable panels each being retractable or rotatable from a first position to a second position.

8. A solar air-heater according to any of claims 1 to 7, comprising a first fan to draw air in to the solar air-heater, and a second fan to drive air out of the solar air-heater and in to the interior of the building.

9. A solar air-heater according to any of claims 1 to 8, configured to be attached to an exterior of the building.

10. A solar air-heater according to any of claims 1 to 9, operation of the solar air-heater being powered by a renewable energy source in communication with the solar air-heater.

11. A solar air-heater according to any of claims 1 to 10, the renewable energy source comprising one or more photovoltaic solar panels.
